# EUROPEAN PATENT SPECIFICATION

(11) **EP 2 326 028 B1**
(45) Date of publication and mention of the grant of the patent: **09.04.2014**
(21) Application number: 08810517.6
(22) Date of filing: 11.09.2008
(51) Int. Cl.: H04B 7/155, H04L 5/00

(54) **RADIO RELAY SYSTEM, RADIO FRAME UTILIZING METHOD AND SETTING METHOD**
FUNKRELAISSYSTEM, FUNKRAHMENBENUTZUNGSVERFAHREN UND EINSTELLVERFAHREN
SYSTÈME DE RELAIS RADIO, PROCÉDÉ D'UTILISATION DE TRAME RADIO ET PROCÉDÉ DE RÉGLAGE

(43) Date of publication of application: 25.05.2011
(60) Divisional application: 11175166.5
(73) Proprietor: Fujitsu Limited, Kawasaki-shi, Kanagawa 211-8588 (JP)
(72) Inventor: NAKAMURA, Michiharu, Kawasaki-shi Kanagawa 211-8588 (JP); OKUDA, Masato, Kawasaki-shi Kanagawa 211-8588 (JP)
(74) Representative: Keltsch, Ulrike
(86) International application number: PCT/JP2008/066465
(87) International publication number: WO 2010/029631

(56) References cited:
- WO-A1-2007/053954
- ZHIFENG TAO ET AL: "Frame Structure Design for IEEE 802.16j Mobile Multihop Relay (MMR) Networks", GLOBAL TELECOMMUNICATIONS CONFERENCE, 2007. GLOBECOM '07. IEEE, IEEE, PISCATAWAY, NJ, USA, 1 November 2007 (2007-11-01), pages 4301-4306, XP031196746, ISBN: 978-1-4244-1042-2
- KOON HOO TEO ET AL: "Adaptive Frame structure for Mobile Multihop Relay (MMR) Networks", 2007 6TH INTERNATIONAL CONFERENCE ON INFORMATION, COMMUNICATIONS & SIGNAL PROCESSING; SINGAPORE; 10 - 13 DECEMBER 2007, IEEE, PISCATAWAY, NJ, USA, 10 December 2007 (2007-12-10), pages 1-5, XP031229602, ISBN: 978-1-4244-0982-2
- BRANLUND D ET AL: "Frame Structures for Multihop Relay System", IEEE 802.16 46TH SESSION, DALLAS, TX, USA, , no. C802.16j-06/231 7 November 2006 (2006-11-07), page 10, XP002625510, Retrieved from the Internet: URL:http://grouper.ieee.org/groups/802/16/ relay/contrib/C80216j-06_231.pdf [retrieved on 2011-03-01]
- 'Global Telecommunications Conference, 2007., 2007.11', November 2007 article ZHIFENG TAO ET AL.: 'Frame Structure Design for IEEE 802.16j MobileMultihop Relay (MMR) Networks', pages 4301 - 4306, XP031196746
- '6th International Conference on Information, Communications & Signal Processing, 2007.12.10', 10 December 2007 article KOON HOO TEO ET AL.: 'Adaptive Frame Structure for Mobile Multihop Relay(MMR) Networks', pages 1 - 5, XP031229602

## Description

### TECHNICAL FIELD

The present invention relates to a radio relay system, and a using method and a setting method of a radio frame.

### BACKGROUND ART

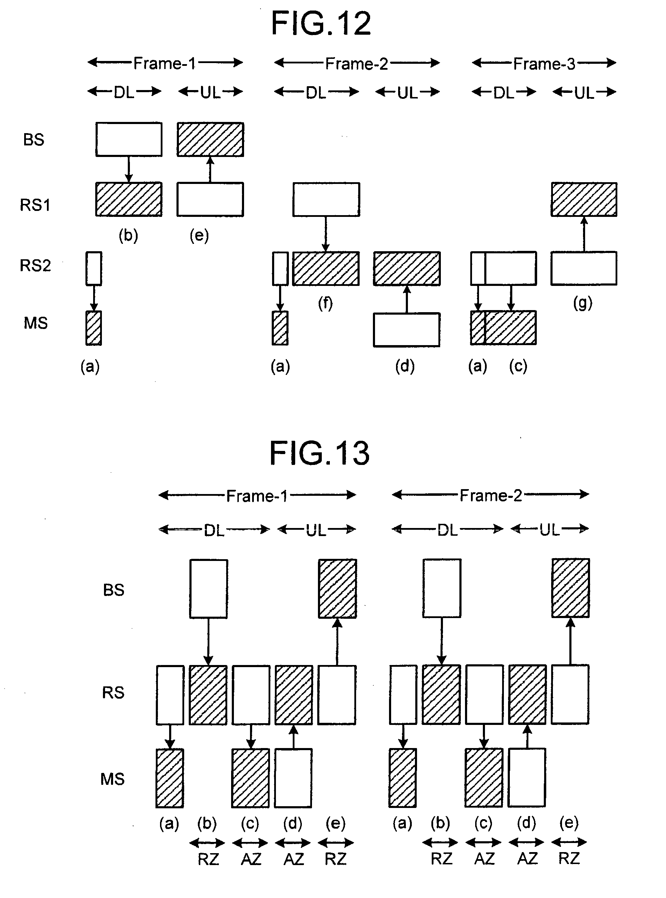

Radio communication may not achieve sufficient radio signal quality between a base station and a mobile station due to various factors such that a distance between the base station and the mobile station is long and an obstacle is between the base station and the mobile station. For example, in this case, there is used a relay station that once receives a signal transmitted from the base station or the mobile station and again transmits the received signal toward the other station. The configuration of a representative radio frame when communication between a base station and a mobile station is performed via a relay station in a time-division duplex (TDD) manner is illustrated in FIG. 13. FIG. 13 is a diagram explaining a conventional art.

As illustrated in FIG. 13, a radio frame includes a time zone (DownLink, DL) in which a signal is transmitted from a base station (BS) to a mobile station (MS) and a time zone (UpLink, UL) in which a signal is transmitted from the mobile station to the base station. The radio frame further includes a time zone (Relay Zone, RZ) in which a signal can be transmitted between the base station and a relay station (RS) and a time zone (Access Zone, AZ) in which a signal can be transmitted between the relay station and the mobile station. As illustrated in FIG. 13, in the head of DL, the relay station instead of the base station transmits a synchronizing signal and a common control signal to the mobile station.

Non-Patent Document 1: Takashi Shono, "WiMAX Textbook", Impress R&D Company, August 5, 2008, p. 262 to 283

Non-Patent Document 2: The Relay Task Group of IEEE 802.16, "IEEE P802.16j/D5 Part 16: Air Interface for Fixed and Mobile Broadband Wireless Access Systems Multi-hop Relay Specification", May 30, 2008, p. 201

ZHIFENG TAO ET AL: "Frame Structure Design for IEEE 802.16j Mobile Multihop Relay (MMR) Networks", GLOBAL TELECOMMUNICATIONS CONFERENCE, 2007. GLOBECOM '07. IEEE, IEEE, PISCATAWAY, NJ, USA, 1 November 2007 (2007-11-01), pages 4301-4306 relates to a framework based upon the 802.16e OFDMA frame structure design, which enables multihop operation while still maintaining the backward compatibility with the legacy mobile stations.

KOON HOO TEO ET AL: "Adaptive Frame structure for Mobile Multihop Relay (MMR) Networks", 2007 6TH INTERNATIONAL CONFERENCE ON INFORMATION, COMMUNICATIONS & SIGNAL PROCESSING; SINGAPORE; 10 - 13 DECEMBER 2007, IEEE, PISCATAWAY, NJ, USA, 10 December 2007 (2007-12-10), pages 1-5 relates to a multi-zone framework based upon the 802.16e OFDMA frame structure design, which enables multihop operation while still maintaining the backward compatibility with the legacy mobile stations.

BRANLUND D ET AL: "Frame Structures for Multihop Relay System", IEEE 802.16 46TH SESSION, DALLAS, TX, USA, , no. C802.16j-06/231 7 November 2006 (2006-11-07), page 10 relates to frame structures for Multihop Relay Systems.

WO2007053954 A1 refers to methods and systems for use with wireless networks having once or more cell in which each cell includes a base station (BS), at least one relay station (RS) and at least one mobile station (MS) . The at least one relay station can be used as an intermediate station for providing communication between the BS and MS. Methods are described for an RS to initially access the network, access of the RS by MSs initially accessing the network, methods of allocating OFDM resources for communicating between the BS, RS and/or MS for example dividing transmission resources into uplink and downlink transmissions, and methods of inserting pilot symbols into transmission resources used by the RS.

### DISCLOSURE OF INVENTION

### PROBLEM TO BE SOLVED BY THE INVENTION

The conventional art has a problem in that transmission efficiency decreases. In other words, as illustrated in FIG. 13, a relay station switches an operation (transmission mode) for transmitting a signal and an operation (reception mode) for receiving a signal at a boundary between RZ and AZ. Because this switching causes a temporal blank period (gap), transmission efficiency decreases.

Therefore, the present invention has been achieved in view of the above problems, and an object of the invention is to provide a radio relay system, and a using method and a setting method of a radio frame that can be used for improving transmission efficiency.

### MEANS FOR SOLVING PROBLEM

In order to solve the problems described above and achieve the object, a radio relay system for performing data transmission between a base station and a mobile station by using a relaying process performed by a relay station, wherein the radio relay system includes a control unit for changing lengths of time zones in radio frames according to a predetermined pattern of the radio frames, wherein the radio frames include a first time zone in which data transmission is allowed from the base station to the relay station and a second time zone in which data transmission is allowed from the relay station to the plurality of mobile stations including the mobile station, wherein the first time zone of a first radio frame is longer than the first time zone of a second radio frame, and the second time zone of the first radio frame is shorter than the second time zone of the second radio frame.

### EFFECT OF THE INVENTION

It is possible to improve transmission efficiency.

### BRIEF DESCRIPTION OF DRAWINGS

FIG. 1 is a diagram explaining the configuration of a radio frame of a radio relay system according to a first embodiment.
FIG. 2 is a block diagram illustrating the configuration of the radio relay system.
FIG. 3 is a sequence diagram illustrating the processing procedure of a base station.
FIG. 4 is a sequence diagram illustrating the processing procedure of a relay station.
FIG. 5 is a diagram explaining the improvement of transmission efficiency.
FIG. 6 is a diagram explaining the configuration of a radio frame of a radio relay system according to a second embodiment.
FIG. 7 is a diagram explaining the configuration of a radio frame of a radio relay system according to a third embodiment.
FIG. 8 is a diagram explaining the configuration of a radio frame of a radio relay system according to a fourth embodiment.
FIG. 9 is a diagram explaining the configuration of a radio frame of the radio relay system according to the fourth embodiment.
FIG. 10 is a diagram explaining the configuration of a radio frame of a radio relay system according to a fifth embodiment.
FIG. 11 is a diagram explaining the configuration of a radio frame of the radio relay system according to the fifth embodiment.
FIG. 12 is a diagram explaining the configuration of a radio frame of a radio relay system according to a sixth embodiment.
FIG. 13 is a diagram explaining a conventional art.

### EXPLANATIONS OF LETTERS OR NUMERALS

- 100: Base station
- 110: Transmitting unit
- 111: Digital/analog converting unit
- 112: Modulation unit
- 113: Encoding unit
- 120: Receiving unit
- 121: Analog/digital converting unit
- 122: Demodulation unit
- 123: Decoding unit
- 130: Control unit
- 131: Control data creating unit
- 200: Relay station
- 210: Transmitting unit
- 211: Digital/analog converting unit
- 212: Modulation unit
- 213: Encoding unit
- 220: Receiving unit
- 221: Analog/digital converting unit
- 222: Demodulation unit
- 223: Decoding unit
- 230: Control data analyzing unit
- 300: Mobile station
- 301: Input unit
- 302: Output unit
- 310: Transmitting unit
- 311: Digital/analog converting unit
- 312: Modulation unit
- 313: Encoding unit
- 320: Receiving unit
- 321: Analog/digital converting unit
- 322: Demodulation unit
- 323: Decoding unit

### BEST MODE(S) FOR CARRYING OUT THE INVENTION

Exemplary embodiments of the present invention will be explained in detail below with reference to the accompanying drawings.

### First Embodiment

### Configuration of Radio Frame

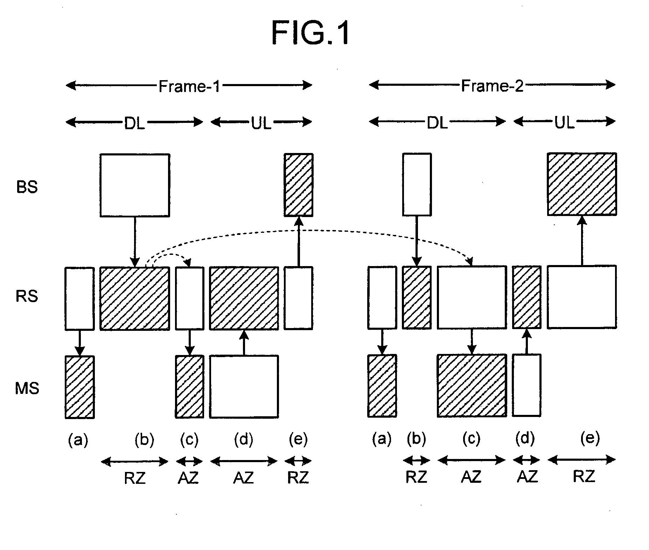

First, it will be explained about the configuration of a radio frame of a radio relay system according to the first embodiment with reference to FIG. 1. FIG. 1 is a diagram explaining the configuration of a radio frame of the radio relay system according to the first embodiment. In this case, in FIG. 1, a white square indicates transmission data, a square with a slant line indicates reception data, and an arrow indicates a data transmission direction.

As illustrated in FIG. 1, the radio relay system according to the first embodiment changes the length of RZ or the length of AZ with a predetermined pattern depending on radio frames. In this case, RZ is a time zone in which a signal can be transmitted between a base station (BS) and a relay station (RS) and AZ is a time zone in which a signal can be transmitted between the relay station (RS) and a plurality of mobile stations (MS).

Specifically, the radio relay system according to the first embodiment changes the length of RZ of DL of a radio frame in such a manner that the length of RZ of Frame-1 is relatively longer than that of RZ of Frame-2 as illustrated in FIG. 1 (see (b)). On the contrary, the radio relay system changes the length of AZ of DL of the radio frame in such a manner that the length of AZ of Frame-1 is relatively shorter than that of AZ of Frame-2 (see (c)).

Moreover, the radio relay system according to the first embodiment changes the length of AZ of UL of the radio frame in such a manner that the length of AZ of Frame-1 is relatively longer than that of AZ of Frame-2 (see (d)) as illustrated in FIG. 1. On the contrary, the radio relay system changes the length of RZ of UL of the radio frame in such a manner that the length of RZ of Frame-1 is relatively shorter than that of RZ of Frame-2 (see (e)).

In this case, when data to be transmitted to the mobile station is received from the base station by using a predetermined frame, the relay station according to the first embodiment does not transmit the whole of the data to the mobile station by using the frame but transmits only a part of data, for which transmission delay is not allowed, by using the frame. Then, the relay station transmits the other part of the data, for which transmission delay is allowed, by using the next frame.

For example, as illustrated in FIG. 1, when data to be transmitted to the mobile station is received from the base station by using Frame-1 (see (b)), the relay station transmits only data such as verbal communication data, for which transmission delay is not allowed, in the (c) time zone of Frame-1. On the other hand, the relay station transmits data such as mail data, for which transmission delay is allowed, in the (c) time zone of Frame-2.

Because of this, according to the radio relay system according to the first embodiment, it is possible to improve transmission efficiency. In other words, the relay station transmits a part, for which transmission delay is allowed, of data received from the base station as data to be transmitted to the mobile station by using the next frame. For this reason, according to the radio relay system according to the first embodiment, a temporal blank period caused by switching between a transmission mode and a reception mode is limited to a time required for encoding a part for which transmission delay is not allowed, thereby improving transmission efficiency.

Moreover, a part of data for which transmission delay is allowed has a temporal margin. Therefore, because a comparatively time-consuming high-level encoding process can be performed, communication quality can be improved.

### Configuration of Radio Relay System

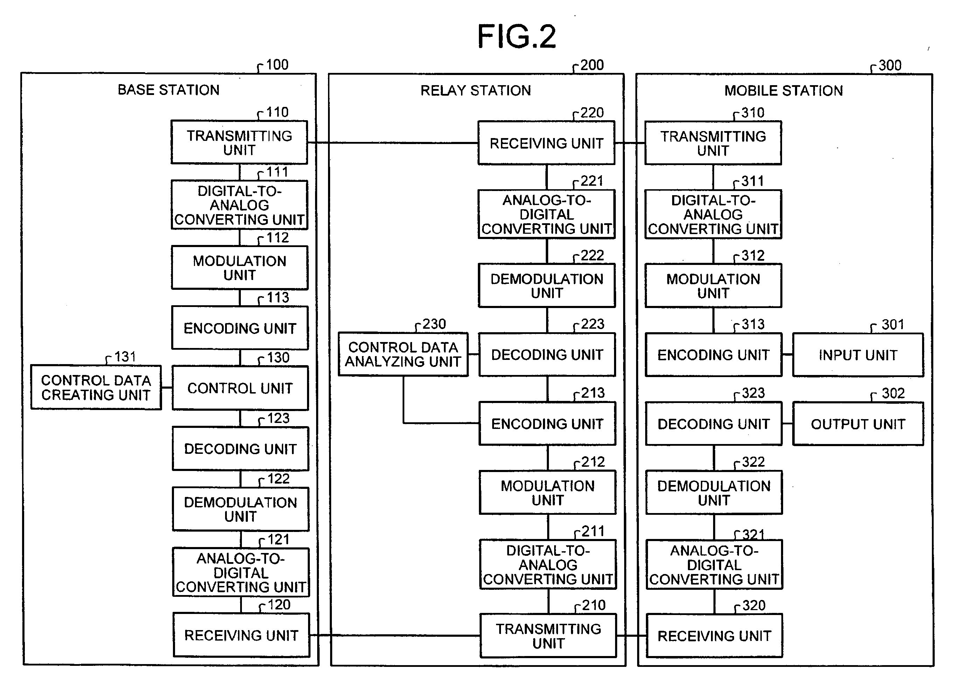

Next, it will be explained about the configuration of the radio relay system with reference to FIG. 2. FIG. 2 is a block diagram illustrating the configuration of the radio relay system. As illustrated in FIG. 2, the radio relay system according to the first embodiment includes a base station 100, a relay station 200, and a mobile station 300. For convenience of explanation, the base station 100, the relay station 200, and the mobile station 300 are illustrated one-by-one in FIG. 2.

As illustrated in FIG. 2, the base station 100 includes a transmitting unit 110, a digital-to-analog converting unit 111, a modulation unit 112, an encoding unit 113, a receiving unit 120, an analog-to-digital converting unit 121, a demodulation unit 122, a decoding unit 123, a control unit 130, and a control data creating unit 131.

The control unit 130 controls data transmission between the base station 100 and the relay station 200. Specifically, when data for the mobile station 300 is received from the relay station 200 or a device located at the upstream of the base station 100, the control unit 130 requests the control data creating unit 131 to create control data. Moreover, when the control data is received from the control data creating unit 131, the control unit 130 couples the received control data and the data for the mobile station 300 and transmits the coupled data to the encoding unit 113.

As described below, when control data is once received and analyzed and a frame construction is specified, the relay station 200 can essentially perform a process without the control data as far as the frame construction is not changed after that. For this reason, it is preferable that the control unit 130 appropriately creates control data at a timing at which the frame construction is changed. When control data is not created, it is preferable that the control unit 130 transmits the data for the mobile station 300 to the encoding unit 113 without modification.

The control data creating unit 131 creates control data. Specifically, when a control data creation request is received from the control unit 130, the control data creating unit 131 creates control data and transmits the created control data to the control unit 130. In this case, control data is data that includes a synchronizing signal and a common control signal. A common control signal includes the designation for the configuration of a radio frame. In other words, a predetermined pattern for changing the length of RZ or the length of AZ is designated by control data.

In IEEE P802.16j, an RCD (R-link channel descriptor) message is defined as control data transmitted from the base station to the relay station. The control data creating unit 131 according to the first embodiment designates the configuration of a radio frame by using the RCD message. For example, as illustrated in Table 1, it is designated by the RCD message whether the repetition of a frame construction is used. When the repetition of a frame construction is used, the RCD message designates the number of iterative frames and a frame construction having the iterative frames. Moreover, the frame construction includes the number of zones constituting a frame and information identifying RZ or AZ.

**Table 1**

| Name | Number of bits | Description |
|---|---|---|
| flag indicating whether repetition of frame construction is used | 1 | 1:use, 0:not use |
| If flag indicating whether repetition of frame construction is used = 1{ | | |
| number of frames repeating frame construction | 2 | 0b00:1, 0b01:2, 0b10:3, 0b11:4 |
| For(n=0; n<number of frames repeating frame construction; n++) { | | |
| number of zones inside DL sub-frame | 2 | |
| For(i=0; i<number of zones inside DL sub-frame; i++) { | | |
| zone mode | 1 | 0:Access zone, 1:relay zone |
| starting position of zone indicated with OFDM symbol | 7 | unsigned integer |
| } | | |
| number of zones inside UL sub-frame | 2 | |
| For(i=0; i<number of zones inside UL sub-frame; i++) { | | |
| zone mode | 1 | 0:Access zone, 1:relay zone |
| starting position of zone indicated with OFDM symbol | 7 | unsigned integer |
| } | | |
| } | | |
| } | | |

For example, the control data creating unit 131 according to the first embodiment designates a flag that uses the repetition of a frame construction as "1" and designates the number of frames that repeats a frame construction as "2". Moreover, the control data creating unit 131 designates the number of zones inside a DL sub-frame or a UL sub-frame of Frame-1 as "2". A zone mode is designated with "RZ" and "AZ" for the DL sub-frame and is designated with "AZ" and "RZ" for the UL sub-frame. The control data creating unit 131 designates the number of zones inside a DL sub-frame or a UL sub-frame of Frame-2 as "2". A zone mode is designated with "RZ" and "AZ" for the DL sub-frame and is designated with "AZ" and "RZ" for the UL sub-frame.

The encoding unit 113 encodes data to be transmitted to the relay station 200. Specifically, when the data for the mobile station 300 is received from the control unit 130, the encoding unit 113 encodes the received data and hands the encoded data to the modulation unit 112.

The modulation unit 112 modulates data to be transmitted to the relay station 200. Specifically, when the data for the mobile station 300 is received from the encoding unit 113, the modulation unit 112 modulates the received data and hands the modulated data to the digital-to-analog converting unit 111.

The digital-to-analog converting unit 111 converts data to be transmitted to the relay station 200 from digital to analog. Specifically, when the data for the mobile station 300 is received from the modulation unit 112, the digital-to-analog converting unit 111 converts the received data from digital to analog and hands the converted data to the transmitting unit 110.

The transmitting unit 110 transmits data to the relay station 200. Specifically, when data is received from the digital-to-analog converting unit 111, the transmitting unit 110 transmits the received data to the relay station 200.

The receiving unit 120 receives data from the relay station 200. Specifically, upon receiving data from the relay station 200, the receiving unit 120 hands the received data to the analog-to-digital converting unit 121.

The analog-to-digital converting unit 121 converts the data received from the relay station 200 from analog to digital. Specifically, upon receiving data from the receiving unit 120, the analog-to-digital converting unit 121 converts the received data from analog to digital and transmits the converted data to the demodulation unit 122.

The demodulation unit 122 demodulates the data received from the relay station 200. Specifically, when data is received from the analog-to-digital converting unit 121, the demodulation unit 122 demodulates the received data and hands the demodulated data to the decoding unit 123.

The decoding unit 123 decodes the data received from the relay station 200. Specifically, when data is received from the demodulation unit 122, the decoding unit 123 decodes the received data and hands the decoded data to the control unit 130.

As illustrated in FIG. 2, the relay station 200 includes a transmitting unit 210, a digital-to-analog converting unit 211, a modulation unit 212, an encoding unit 213, a receiving unit 220, an analog-to-digital converting unit 221, a demodulation unit 222, a decoding unit 223, and a control data analyzing unit 230.

When the data for the mobile station 300 is received from the base station 100, the receiving unit 220 hands the received data to the analog-to-digital converting unit 221. When data is received from the receiving unit 220, the analog-to-digital converting unit 221 converts the received data from analog to digital and hands the converted data to the demodulation unit 222. When data is received from the analog-to-digital converting unit 221, the demodulation unit 222 demodulates the received data and hands the demodulated data to the decoding unit 223.

The decoding unit 223 decodes the data received from the demodulation unit 222. Specifically, the decoding unit 223 decodes the data received from the demodulation unit 222 to acquire control data and data for the mobile station 300. Moreover, the decoding unit 223 requests the control data analyzing unit 230 to analyze the control data and the like.

The control data analyzing unit 230 analyzes the control data and the like received from the base station 100. Specifically, upon receiving an analysis request for control data from the decoding unit 223, the control data analyzing unit 230 analyzes the control data and the data for the mobile station 300 and hands the analysis result and the data for the mobile station 300 to the encoding unit 213 when the control data is coupled with the data for the mobile station 300. For example, the control data analyzing unit 230 analyzes the configuration of a radio frame and identification information indicating whether data is data for which transmission delay is allowed. On the other hand, when the control data is not coupled with the data for the mobile station 300, the control data analyzing unit 230 analyzes only the data for the mobile station 300 and hands the analysis result and the data for the mobile station 300 to the encoding unit 213.

In this case, the control data analyzing unit 230 analyzes DL-MAP and R-FCH included in the data for the relay station 200 to acquire the present frame number. The control data analyzing unit 230 performs a modulo arithmetic on the acquired frame number and the number of frames designated by an RCD message. Then, the control data analyzing unit 230 specifies a frame construction corresponding to a number indicated by the modulo arithmetic result from frame constructions of the number of iterative frames. In this way, the control data analyzing unit 230 uniquely specifies a parameter of a frame construction to be used from a frame number and hands the specified parameter to the decoding unit 223 and the encoding unit 213 as the analysis result. For example, the control data analyzing unit 230 according to the first embodiment determines whether the frame number is an even number or not an odd number, and specifies a frame construction corresponding to the determination result and specifies a parameter.

A frame construction in which m frames are repeated as a unit can be also used. In this case, a frame construction in which m frames are repeated as a unit is designated by control data. The control data analyzing unit 230 performs a modulo arithmetic on the acquired frame number and the number "m" of frames and specifies a frame corresponding to a number indicated by the result of the modulo arithmetic. For example, when a frame construction in which three frames are repeated as a unit is used, a three-way frame construction distinguished with "0", "1", and "2" is designated by control data. The control data analyzing unit 230 performs a modulo arithmetic on the acquired frame number and the number "3" of frames, and specifies a frame construction indicated by "0" if its remainder is "0". On the other hand, the control data analyzing unit 230 specifies a frame construction indicated by "2" if its remainder is "1" and specifies a frame construction indicated by "2" if its remainder is "2".

Upon receiving the analysis result and the data for the mobile station 300 from the control data analyzing unit 230, the encoding unit 213 encodes the data for the mobile station 300 in accordance with the analysis result of control data and hands the encoded data to the modulation unit 212. The analysis result includes the parameter of the frame construction specified by the control data analyzing unit 230 and the identification information indicating whether data is data for which transmission delay is allowed.

In the first embodiment, it is assumed that the data for the mobile station 300 together includes data for which transmission delay is not allowed and data for which transmission delay is allowed. For this reason, the encoding unit 213 according to the first embodiment first encodes data for which transmission delay is not allowed as data of Frame-1 in accordance with the parameter received from the control data analyzing unit 230, and hands the encoded data to the modulation unit 212. After that, the encoding unit 213 encodes data for which transmission delay is allowed as data of Frame-2 in accordance with the parameter received from the control data analyzing unit 230, and hands the encoded data to the modulation unit 212.

It is only necessary that the data to be transmitted to the mobile station 300 in Frame-2 is demodulated, decoded, encoded, and modulated until Frame-2 is transmitted by the transmitting unit 210. In other words, the demodulation unit 222, the decoding unit 223, the encoding unit 213, and the modulation unit 212 give a temporal margin to the data transmitted to the mobile station 300 in Frame-2. For this reason, the decoding unit 223 and the encoding unit 213 may perform comparatively time-consuming high-level decoding and encoding processes on the data transmitted to the mobile station 300 in Frame-2.

Upon receiving the data for the mobile station 300 from the encoding unit 213, the modulation unit 212 modulates the received data and hands the modulated data to the digital-to-analog converting unit 211.

In the first embodiment, the modulation unit 212 first modulates data of Frame-1 and hands the modulated data to the digital-to-analog converting unit 211. After that, the modulation unit 212 modulates data of Frame-2.

Upon receiving the data for the mobile station 300 from the modulation unit 212, the digital-to-analog converting unit 211 converts the received data from digital to analog and hands the converted data to the transmitting unit 210.

In the first embodiment, the digital-to-analog converting unit 211 first converts data of Frame-1 and hands the converted data to the transmitting unit 210. After that, the digital-to-analog converting unit 211 converts data of Frame-2.

Upon receiving the data for the mobile station 300 from the digital-to-analog converting unit 211, the transmitting unit 210 transmits the received data to the mobile station 300.

In the first embodiment, the transmitting unit 210 first transmits promptly data of Frame-1 to the mobile station 300. On the other hand, the transmitting unit 210 waits a timing at which the data for the mobile station 300 is transmitted in Frame-2 and then transmits data of Frame-2 at the timing.

In the first embodiment, the relay station 200 transmits control data for each frame to the mobile station 300. Before the data for the mobile station 300 is transmitted, the relay station 200 transmits the control data. For example, it is only necessary that the control data transmitted by the relay station 200 to the mobile station 300 is transmitted as a part of data that is previously transmitted from the base station 100 to the relay station 200 by using a frame before one or more frames. At this time, before the data for the mobile station 300 is transmitted, the relay station 200 can transmit control data. Alternatively, for example, the relay station 200 can personally create control data to be transmitted to the mobile station 300 and transmit the control data before the data for the mobile station 300 is transmitted.

As illustrated in FIG. 2, the mobile station 300 includes an input unit 301, an output unit 302, a transmitting unit 310, a digital-to-analog converting unit 311, a modulation unit 312, an encoding unit 313, a receiving unit 320, an analog-to-digital converting unit 321, a demodulation unit 322, and a decoding unit 323.

When the data for the mobile station 300 is received from the relay station 200, the receiving unit 320 hands the received data to the analog-to-digital converting unit 321. When data is received from the receiving unit 320, the analog-to-digital converting unit 321 converts the received data from analog to digital and hands the converted data to the demodulation unit 322. When data is received from the analog-to-digital converting unit 321, the demodulation unit 322 demodulates the received data and hands the demodulated data to the decoding unit 323. When data is received from the demodulation unit 322, the decoding unit 323 decodes the received data and hands the decoded data to the output unit 302. The output unit 302 outputs the data received from the decoding unit 323. In this case, a series of processes for receiving data from the relay station 200 are performed in accordance with the control data received from the relay station 200.

On the other hand, the input unit 301 hands data input by a user of the mobile station 300 to the encoding unit 313. When data is received from the input unit 301, the encoding unit 313 encodes the received data and hands the encoded data to the modulation unit 312. When data is received from the encoding unit 313, the modulation unit 312 modulates the received data and hands the modulated data to the digital-to-analog converting unit 311. When data is received from the modulation unit 312, the digital-to-analog converting unit 311 converts the received data from digital to analog and hands the converted data to the transmitting unit 310. When data is received from the digital-to-analog converting unit 311, the transmitting unit 310 transmits the received data to the relay station 200. In this case, a series of processes for transmitting data to the relay station 200 are performed in accordance with the control data received from the relay station 200.

### Processing Procedures of Radio Relay System

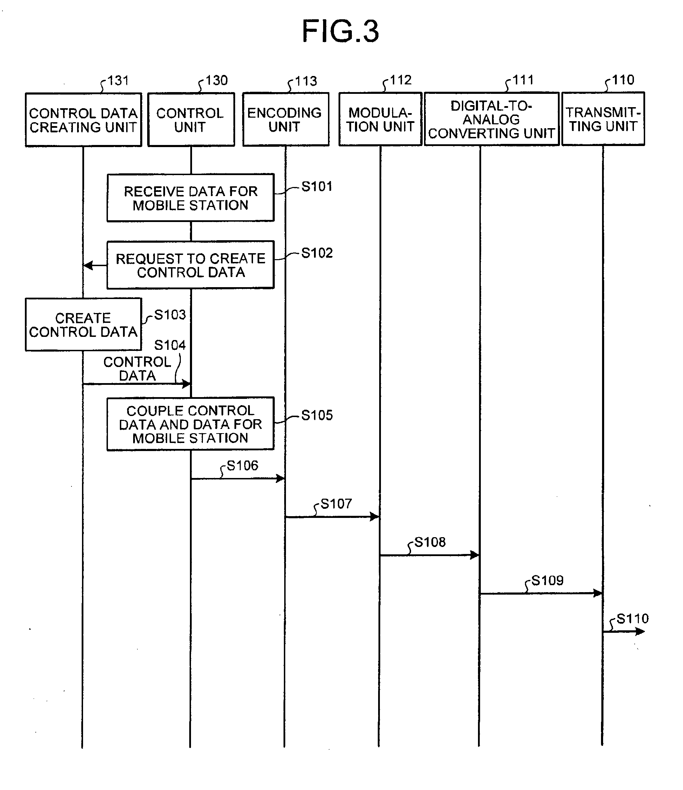

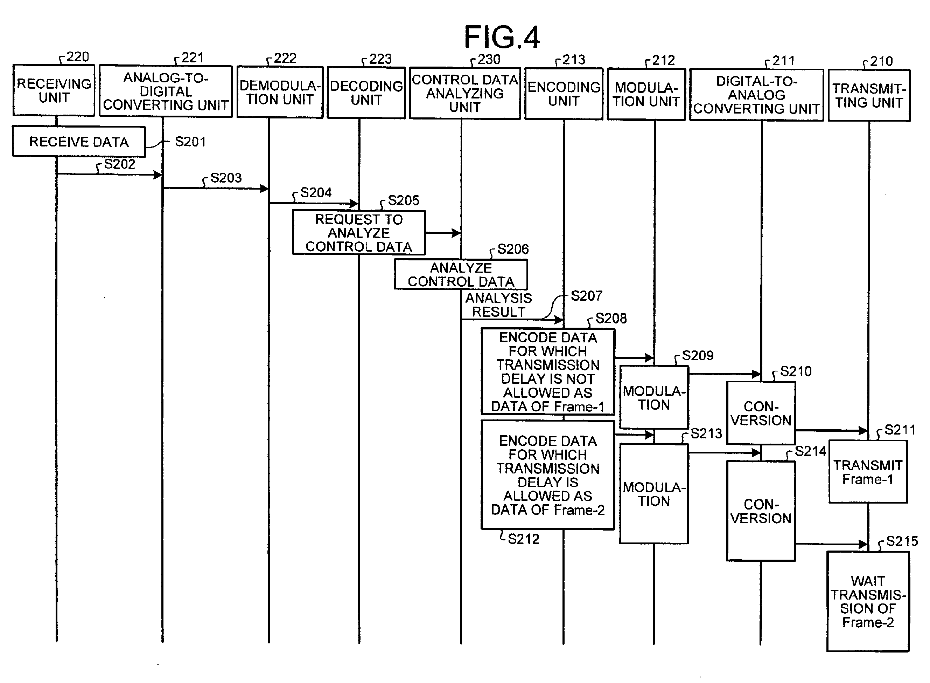

Next, it will be explained about the processing procedures of the radio relay system with reference to FIGS. 3 and 4. FIG. 3 is a sequence diagram illustrating the processing procedure of the base station. FIG. 4 is a sequence diagram illustrating the processing procedure of the relay station. Hereinafter, the processing procedure of DL is described. The processing procedure of UL is performed similarly to that of DL except that control data is not transmitted.

First, as illustrated in FIG. 3, the control unit 130 of the base station 100 receives data for the mobile station 300 from the relay station 200 or a device located at the upstream of the base station 100 (Step S101).

Next, the control unit 130 requests the control data creating unit 131 to create control data (Step S102).

Then, the control data creating unit 131 creates control data (Step S103) and sends the created control data to the control unit 130 (Step S104).

Next, the control unit 130 couples the received control data and the data for the mobile station 300 (Step S105) and sends the coupled data to the encoding unit 113 (Step S106).

After that, the data is sent from the encoding unit 113 to the modulation unit 112 (Step S107), the data is sent from the modulation unit 112 to the digital-to-analog converting unit 111 (Step S108), and the data is sent from the digital-to-analog converting unit 111 to the transmitting unit 110 (Step S109). Then, the transmitting unit 110 transmits the data to the relay station 200 (Step S110).

Next, as illustrated in FIG. 4, the receiving unit 220 of the relay station 200 receives the data for the mobile station 300 (Step S201) and sends the received data to the analog-to-digital converting unit 221 (Step S202).

Next, the data is sent from the analog-to-digital converting unit 221 to the demodulation unit 222 (Step S203), and the data is sent from the demodulation unit 222 to the decoding unit 223 (Step S204).

The decoding unit 223 decodes the data received from the demodulation unit 222, and requests the control data analyzing unit 230 to analyze control data and the like upon acquiring the data for the mobile station 300 (Step S205).

On the other hand, when an analysis request for control data is received from the decoding unit 223, the control data analyzing unit 230 analyzes control data (Step S206) and sends the analysis result and the data for the mobile station 300 to the encoding unit 213 (Step S207).

Then, the encoding unit 213 encodes the data for the mobile station 300 in accordance with the analysis result. In this case, the encoding unit 213 first encodes data for which transmission delay is not allowed as data of Frame-1 and sends the encoded data to the modulation unit 212 (Step S208).

Then, the modulation unit 212 modulates the data of Frame-1 and sends the modulated data to the digital-to-analog converting unit 211 (Step S209). Next, the digital-to-analog converting unit 211 converts the data of Frame-1 from digital to analog and sends the converted data to the transmitting unit 210 (Step S210). Then, the transmitting unit 210 promptly transmits Frame-1 (Step S211).

On the other hand, the encoding unit 213 sends the encoded data to the modulation unit 212 at Step S208, and then encodes data for which transmission delay is allowed as data of Frame-2 and sends the encoded data to the modulation unit 212 (Step S212).

Then, the modulation unit 212 modulates the data of Frame-2 and sends the modulated data to the digital-to-analog converting unit 211 (Step S213). Next, the digital-to-analog converting unit 211 converts the data of Frame-2 from digital to analog and sends the converted data to the transmitting unit 210 (Step S214). At this time, unlike with Frame-1, the transmitting unit 210 waits a timing at which the data for the mobile station 300 is transmitted in Frame-2 and transmits data of Frame-2 at the timing (Step S215).

In the radio relay system according to the first embodiment, a temporal blank period caused by switching between a transmission mode and a reception mode is a time period from receiving the data for the mobile station 300 at Step S201 to starting the transmission of Frame-1 at Step S211.

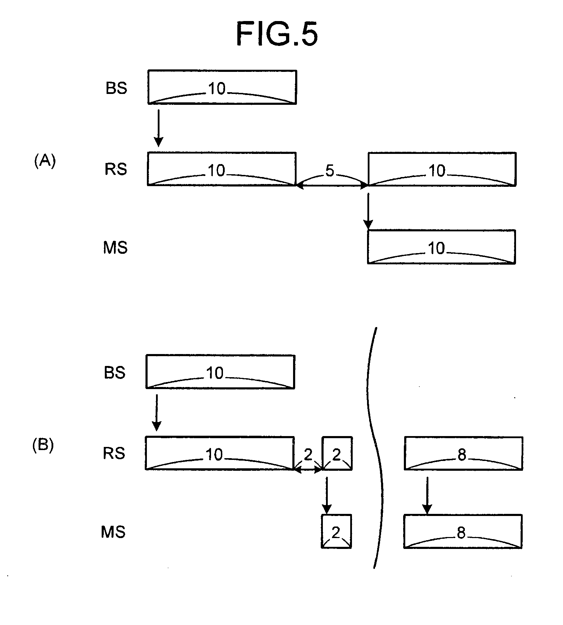

FIG. 5 is a diagram explaining the improvement of transmission efficiency. For example, as illustrated in FIG. 5, it is assumed that the base station transmits data for transmission and reception processes having a workload "10" to the relay station. The relay station receives data and then performs a decoding or encoding process on the received data. However, for example, when a switching time between a reception mode and a transmission mode is only a time for which a work of "5" is performed, it is necessary to multiplex processes in order to perform a workload of "10" during this time in such a manner that a decoding process is started before the reception is wholly finished or a transmission process is started before an encoding process is completed. Therefore, this has shortcoming that a method for controlling a series of transmission and reception processes becomes complicated. Otherwise, a sufficient blank period must be provided in order to perform a workload "10" between a reception mode and a transmission mode, and thus transmission efficiency decreases.

On the contrary, the radio relay system according to the first embodiment first transmits only data for which transmission delay is not allowed by using Frame-1 and then transmits data for which transmission delay is allowed by using Frame-2. In other words, as illustrated in (B) of FIG. 5, assuming that a ratio of data for which transmission delay is not allowed to data transmitted from the base station is, for example, 20%, the relay station promptly transmits data when a transmission and reception process having a workload "2" is performed. Then, the relay station performs a decoding and encoding process on data for which transmission delay is allowed within a given temporal margin. In this case, a transmission and reception process for a workload "8" is not performed with a workload "8" but is performed along with more processes, and thus receiver sensitivity can be improved or a more amount of data can be processed. As a result, transmission efficiency is improved.

### Effect of First Embodiment

As described above, according to the first embodiment, the radio relay system changes the length (RZ) of a time zone in which data transmission is allowed between the base station 100 and the relay station 200 and the length (AZ) of a time zone in which data transmission is allowed between the relay station 200 and the plurality of mobile stations 300, with a predetermined pattern depending on radio frames. The "RZ" is a time zone in which data transmission is allowed from the base station 100 to the relay station 200 or a time zone in which data transmission is allowed from the relay station 200 to the base station 100. The "AZ" is a time zone in which data transmission is allowed from the relay station 200 to the mobile station 300 or a time zone in which data transmission is allowed from the mobile station 300 to the relay station 200.

Specifically, one radio frame according to the first embodiment includes RZ in which data transmission is allowed between the base station 100 and the relay station 200 and AZ in which data transmission is allowed between the relay station 200 and the mobile station 300. Moreover, the length of RZ of Frame-1 is relatively longer than that of RZ of Frame-2 and the length of AZ of Frame-1 is relatively shorter than that of AZ of Frame-2. Moreover, the radio relay system changes the length of RZ or the length of AZ for each radio frame.

The radio relay system provides, in a radio frame in a time sharing manner, a zone (RZ) that is used for communication between the base station 100 and the relay station 200 and a zone (AZ) that is used for communication between the relay station 200 and the mobile station 300. Moreover, the radio relay system alternately repeats, for each radio frame, a frame in which a large portion is assigned to the zone (RZ) that is used for communication between the base station 100 and the relay station 200 and a frame in which a large portion is assigned to the zone (AZ) that is used for communication between the relay station 200 and the mobile station 300.

Moreover, the radio relay system provides, in a radio frame in a time sharing manner, a zone (RZ) that is used for communication between the base station 100 and the relay station 200 and a zone (AZ) that is used for communication between the relay station 200 and the mobile station 300. Moreover, the radio relay system sends configuration information of each zone from the base station 100 to the relay station 200 and repeatedly uses the configuration information in order. Moreover, a plurality of frame constructions is uniquely led from a radio frame number and two-way zone configuration information is used. In this way, overhead relating to the notification of a frame construction is reduced and thus efficient data transmission can be performed.

Because of this, according to the radio relay system according to the first embodiment, transmission efficiency can be improved. In other words, the relay station 200 transmits a part for which transmission delay is allowed, of data received from the base station 100 as data to be transmitted to the mobile station 300, by using the next frame. For this reason, according to the radio relay system according to the first embodiment, a temporal blank period caused by switching between a transmission mode and a reception mode is limited to a time for encoding a part of data for which transmission delay is not allowed, thereby improving transmission efficiency.

Moreover, because a temporal margin is given to another part of data for which transmission delay is allowed and thus a comparatively time-consuming high-level encoding process can be performed, communication quality can be improved.

The relay station 200 can relay data as a large block every two (to "m") frames so as to achieve a larger error correction effect.

### Second Embodiment

In the configuration of a radio frame according to the first embodiment, it was assumed that data for which transmission delay is not allowed and data for which transmission delay is allowed exist together. In the second embodiment, it will be explained about the configuration of a radio frame when data for which transmission delay is not allowed does not exist.

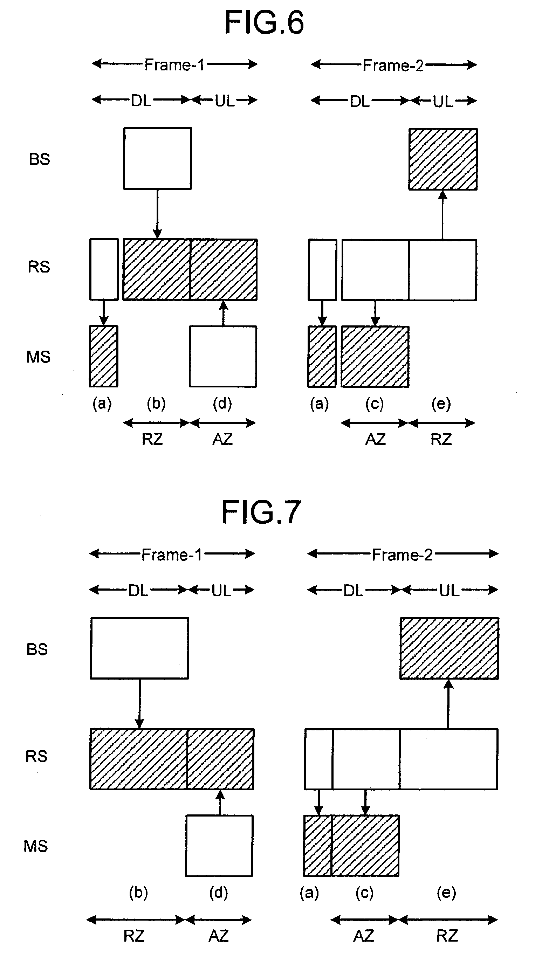

It will be explained about the configuration of a radio frame of a radio relay system according to the second embodiment with reference to FIG. 6. FIG. 6 is a diagram explaining the configuration of a radio frame of the radio relay system according to the second embodiment.

As illustrated in FIG. 6, similarly to the first embodiment, the radio relay system according to the second embodiment changes the length of RZ or the length of AZ with a predetermined pattern depending on radio frames. Specifically, the radio relay system according to the second embodiment changes DL of a radio frame in such a manner that AZ is not provided in the one radio frame and only RZ is assigned to the radio frame as illustrated in FIG. 6 (see (b)). Moreover, the radio relay system according to the second embodiment changes UL of the radio frame in such a manner that RZ is not provided in the one radio frame and only AZ is assigned to the radio frame as illustrated in FIG. 6 (see (d)).

In this case, when data to be transmitted to the mobile station is received from the base station by using a predetermined frame, the relay station according to the second embodiment does not transmit the data to the mobile station by using this frame but transmits the data by using the next frame.

For example, as illustrated in FIG. 6, when data to be transmitted to the mobile station is received from the base station by using Frame-1 (see (b)), the relay station transmits the data by using Frame-2 (see (c)).

### Effect of Second Embodiment

As described above, according to the second embodiment, a radio frame, which does not include a time zone (RZ) in which data transmission is allowed between the base station 100 and the relay station 200 or a time zone (AZ) in which data transmission is allowed between the relay station 200 and the mobile station 300, is formed by the change performed by a predetermined pattern. Moreover, the radio relay system alternately repeats, in a data transmission area for each radio frame, a frame in which only the zone (RZ) used for communication between the base station 100 and the relay station 200 is assigned and a frame in which only the zone (AZ) used for communication between the relay station 200 and the mobile station 300 is assigned.

Because of this, according to the radio relay system of the second embodiment, transmission efficiency can be further improved. In other words, in order to receive data to be transmitted to the mobile station 300 from the base station by using Frame-1 and then transmit data for which transmission delay is not allowed, the relay station 200 according to the first embodiment switches its mode from a data reception mode to a data transmission mode to cause a blank period. On the contrary, because the relay station 200 according to the second embodiment has a frame construction that includes only RA or only AZ for each radio frame, a blank period does not occur and overhead is reduced, and thus transmission efficiency can be further improved.

### Third Embodiment

In the configuration of a radio frame according to the first and second embodiments, it was explained about the case where a synchronizing signal and common control information are transmitted from the relay station to the mobile station by using all frames. This reason is that operations of the mobile station made on the assumption that a synchronizing signal and common control information are transmitted every frame should be assured. A new standard is prescribed in such a manner that the case where a synchronizing signal and common control information are not transmitted every frame may occur. If a mobile station according to the new standard can be a communication target, a relay station may not necessarily transmit a synchronizing signal and common control information for all frames. In the third embodiment, it will be explained about the configuration of a radio frame in which a synchronizing signal and common control information are not necessarily transmitted for all frames.

It will be explained about the configuration of a radio frame of a radio relay system according to the third embodiment with reference to FIG. 7. FIG. 7 is a diagram explaining the configuration of a radio frame of the radio relay system according to the third embodiment.

As illustrated in FIG. 7, similarly to the second embodiment, the radio relay system according to the third embodiment changes the length of RZ or the length of AZ with a predetermined pattern depending on radio frames. Specifically, similarly to the second embodiment, the radio relay system according to the third embodiment changes DL of a radio frame in such a manner that AZ is not provided in the one radio frame and only RZ is assigned to the radio frame as illustrated in FIG. 7 (see (b)). Moreover, similarly to the second embodiment, the radio relay system according to the third embodiment changes UL of the radio frame in such a manner that RZ is not provided in the one radio frame and only AZ is assigned to the radio frame as illustrated in FIG. 7 (see (d)).

In this case, the relay station 200 according to the third embodiment does not transmit a synchronizing signal and common control information every frame but transmits the synchronizing signal and common control information by using a radio frame to which only AZ is assigned in the DL. For example, as illustrated in FIG. 7, its configuration is changed in such a manner that the radio relay system does not transmit the synchronizing signal and common control information by using Frame-1 but transmits them by using Frame-2 (see (a)).

Moreover, the mobile station 300 according to the third embodiment includes the same unit as that of the relay station 200. Specifically, the mobile station 300 includes the same unit as the control data analyzing unit 230 of the relay station 200. Each unit of the mobile station 300 performs various types of processes in accordance with the analysis result analyzed by the control data analyzing unit.

### Effect of Third Embodiment

As described above, according to the third embodiment, the radio relay system transmits a synchronizing signal and a common control signal from the relay station 200 to the mobile station 300 by using a radio frame to which a data zone (AZ) of DL from the relay station 200 to the mobile station 300 is assigned largely or that much.

Because of this, according to the radio relay system of the third embodiment, transmission efficiency can be further improved. In other words, the relay station 200 according to the second embodiment transmits a synchronizing signal and a common control signal to the mobile station 300 and then switches its mode from a data transmission mode to a data reception mode while receiving data from the base station 100. As a result, a blank period occurs. On the contrary, because the relay station 200 according to the third embodiment has a frame construction in which a synchronizing signal and common control information are transmitted by using a radio frame to which only AZ of DL is assigned, it is not required to transmit the synchronizing signal and the common control signal to the mobile station 300 and then receive data from the base station 100. As a result, a blank period does not occur and thus transmission efficiency can be further improved.

Moreover, in the base station 100, the relay station 200, or the mobile station 300, the control structure of a device can be simplified because a state transition for switching between a transmission mode and a reception mode can be reduced.

Moreover, because a frame construction of two (to "m") patterns is alternately repeated without transmitting a frame construction every time, overhead relating to the notification of the frame construction is reduced and thus efficient data transmission can be performed.

### Fourth Embodiment

In the configuration of a radio frame according to the second and third embodiments, the relay station has deflection that reception data is larger than transmission data or transmission data is larger than reception data in one radio frame. In the fourth embodiment, it will be explained about the configuration of a radio frame in which the deflection of transmission and reception data in a radio frame is reduced.

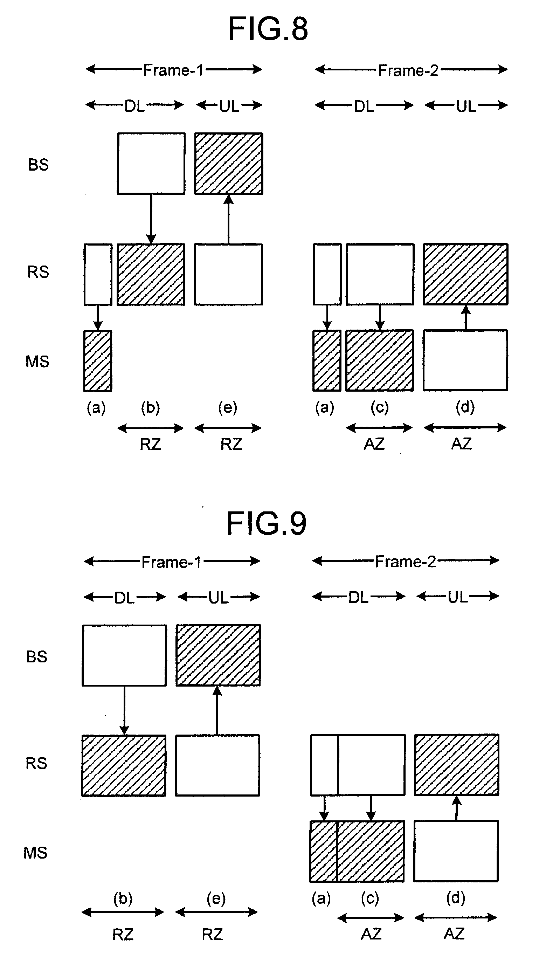

It will be explained about the configuration of a radio frame of a radio relay system according to the fourth embodiment with reference to FIGS. 8 and 9. FIGS. 8 and 9 are diagrams explaining the configuration of a radio frame of the radio relay system according to the fourth embodiment.

As illustrated in FIGS. 8 and 9, similarly to the second and third embodiments, the radio relay system according to the fourth embodiment changes the length of RZ or the length of AZ with a predetermined pattern depending on radio frames. Specifically, similarly to the second and third embodiments, the radio relay system according to the fourth embodiment changes DL of a radio frame in such a manner that AZ is not provided in the one radio frame and only RZ is assigned to the radio frame as illustrated in FIGS. 8 and 9 (see (b)).

In this case, unlike with the second and third embodiments, the radio relay system according to the fourth embodiment changes UL of the radio frame in such a manner that AZ is not provided in and only RZ is assigned to the radio frame to which only RZ of DL is assigned as illustrated in FIGS. 8 and 9 (see (e)).

On the other hand, similarly to the second and third embodiments, the radio relay system according to the fourth embodiment changes DL of the next radio frame in such a manner that RZ is not provided in the one radio frame and only AZ is assigned to the radio frame as illustrated in FIGS. 8 and 9 (see (c)). However, unlike with the second and third embodiments, the radio relay system according to the fourth embodiment changes UL of the radio frame to which only AZ of DL is assigned in such a manner that RZ is not provided and only AZ is assigned as illustrated in FIGS. 8 and 9 (see (d)).

### Effect of Fourth Embodiment

As described above, according to the fourth embodiment, one radio frame includes a time zone (RZ of DL) in which data transmission is allowed from the base station 100 to the relay station 200 and a time zone (RZ of UL) in which data transmission is allowed from the relay station 200 to the base station 100. When the change according to a predetermined pattern is performed, the time zone (RZ of DL) in Frame-1 in which data transmission is allowed from the base station 100 to the relay station 200 is relatively longer than the time zone (RZ of DL) in Frame-2 in which data transmission is allowed from the base station 100 to the relay station 200. Moreover, the time zone (RZ of UL) in Frame-1 in which data transmission is allowed from the relay station 200 to the base station 100 is relatively longer than the time zone (RZ of UL) in Frame-2 in which data transmission is allowed from the relay station 200 to the base station 100.

Moreover, One radio frame includes a time zone (AZ of DL) in which data transmission is allowed from the relay station 200 to the mobile station 300 and a time zone (AZ of UL) in which data transmission is allowed from the mobile station 300 to the relay station 200. The time zone (AZ of DL) in Frame-1 in which data transmission is allowed from the relay station 200 to the mobile station 300 is relatively shorter than the time zone (AZ of DL) in Frame-2 in which data transmission is allowed from the relay station 200 to the mobile station 300. Moreover, the time zone (AZ of UL) in Frame-1 in which data transmission is allowed from the mobile station 300 to the relay station 200 is relatively shorter than the time zone (AZ of UL) in Frame-2 in which data transmission is allowed from the mobile station 300 to the relay station 200.

Moreover, the radio relay system assigns, largely or that much, an upload data zone (RZ) from the relay station 200 to the base station 100 to a frame to which a download data zone (RZ) from the base station 100 to the relay station 200 is assigned DL largely or that much. Moreover, the radio relay system assigns, largely or that much, an upload data zone (AZ) from the mobile station 300 to the relay station 200 to a frame to which a download data zone (AZ) from the relay station 200 to the mobile station 300 is assigned largely or that much.

Because of this, according to the radio relay system according to the fourth embodiment, the congestion of a process in the relay station 200 is prevent in addition to the improvement of transmission efficiency. In other words, the relay station 200 according to the second and third embodiments has deflection that reception data is larger than transmission data or transmission data is larger than reception data in one radio frame. For this reason, for example, a reception data decoding process is congested. On the contrary, the relay station 200 according to the fourth embodiment performs a reception process in DL and performs a transmission process in UL in Frame-1. On the other hand, the relay station 200 performs a transmission process in DL and performs a reception process in UL in Frame-2. As a result, the congestion of processes that the reception of data output from the base station 100 and the reception of data output from the mobile station 300 are simultaneously performed can be avoided. Moreover, resources of circuit hardware can be effectively distributed.

Furthermore, because a defined blank period of a process can occur at the base station 100 or the mobile station 300 in the frame construction, a power consumption can be easily reduced by appropriately controlling an operating state of a circuit. Particularly, the configuration of a radio frame in FIG. 9 indicates that the case where the synchronizing signal and common control information described in the third embodiment are not transmitted every frame is used together. Therefore, switching between a transmission mode and a reception mode in the relay station 200 is not required at the boundary between Frame-1 and Frame-2 or at the boundary between Frame-2 and the next frame (assuming that the same frame construction as that of Frame-1 is used). Also in this case, a blank period accompanied with switching can be removed and thus transmission efficiency can be improved.

### Fifth Embodiment

In the first to fourth embodiments, it has been explained about the case where a base station and a mobile station communicate with each other via a one-stage relay station. In the fifth embodiment, it will be explained about the case where they communicate with each other via multistage relay stations.

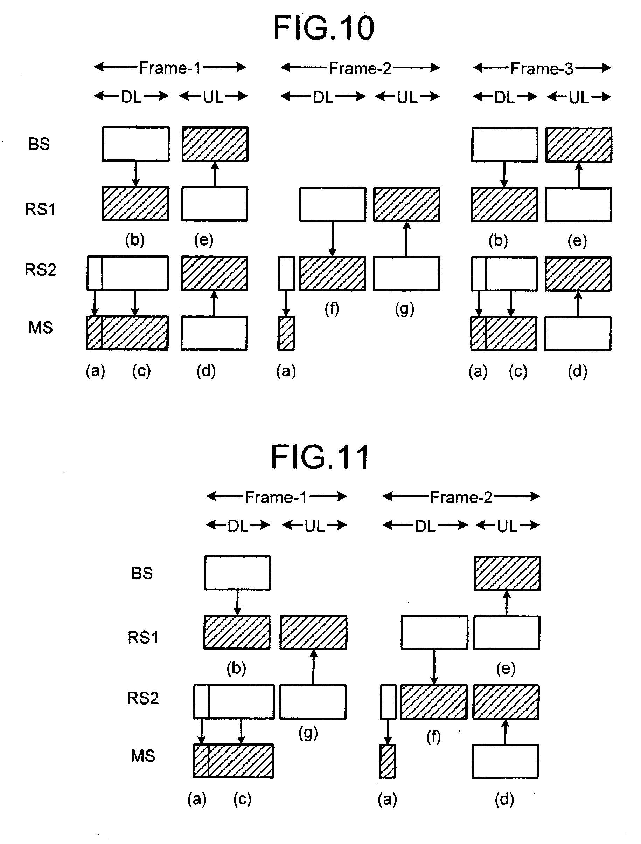

It will be explained about the configuration of a radio frame of a radio relay system according to the fifth embodiment with reference to FIGS. 10 and 11. FIGS. 10 and 11 are diagrams explaining the configuration of a radio frame of the radio relay system according to the fifth embodiment.

As illustrated in FIGS. 10 and 11, the radio relay system according to the fifth embodiment performs transmission from a base station to a relay station 1 in DL by using Frame-1 and at the same time performs transmission from a relay station 2 to a mobile station. Moreover, data is transmitted from the relay station 1 to the relay station 2 by using Frame-2, and the data is transmitted from the relay station 2 to the mobile station by using Frame-3 (assuming that the same frame construction as that of Frame-1 is used). Similarly, the radio relay system performs transmission in UL.

In other words, similarly to the first to fourth embodiments, the radio relay system according to the fifth embodiment changes the length of RZ or the length of AZ with a predetermined pattern depending on radio frames. Specifically, similarly to the second to fourth embodiments, the radio relay system according to the fifth embodiment changes DL of a radio frame in such a manner that AZ is not provided in the one radio frame and only RZ is assigned to the radio frame as illustrated in FIGS. 10 and 11 (see (b)).

Moreover, similarly to the fourth embodiment, the radio relay system according to the fifth embodiment changes UL of the radio frame in such a manner that AZ is not provided in the one radio frame and only RZ is assigned to the radio frame as illustrated in FIGS. 10 and 11 (see (e)). Moreover, the difference of the configuration of a radio frame between FIG. 10 and FIG. 11 is that relay directions in DL and UL are different. Moreover, similarly to the third embodiment, this embodiment can be applied to the case where a synchronizing signal and a common control signal to be transmitted from the relay station 2 to the mobile station are not transmitted every frame.

### Effect of Fifth Embodiment

Because of this, according to the radio relay system according to the fifth embodiment, the radio relay system that performs communications between the base station and the mobile station via multistage relay stations can improves transmission efficiency and further prevent the congestion of processes in the relay stations.

### Sixth Embodiment

In the radio relay system according to the fifth embodiment, it has been explained about the case where the relay station 1 receives a signal from the base station in DL and at the same time the relay station 2 transmits a signal to the mobile station. Moreover, it has been explained about the case where the relay station 2 receives a signal from the mobile station in UL and at the same time the relay station 1 transmits a signal to the base station. However, a signal may not be received due to interference between each other in some cases. For this reason, the sixth embodiment employs the radio frame configuration in which three frames are repeated as illustrated in FIG. 12 in order to avoid the interference.

It will be explained about the configuration of a radio frame of a radio relay system according to the sixth embodiment with reference to FIG. 12. FIG. 12 is a diagram explaining the configuration of a radio frame of the radio relay system according to the sixth embodiment.

In FIG. 12, in DL, data is transmitted from the base station to the relay station 1 by using Frame-1, is transmitted from the relay station 1 to the relay station 2 by using Frame-2, and is transmitted from the relay station 2 to the mobile station by using Frame-3. In UL, data is transmitted from the mobile station to the relay station 2 by using Frame-2, and then data is relayed in order. Moreover, it can be considered that data transmitted from the mobile station to the relay station 2 by using Frame-2 is relayed in order and data transmitted from the mobile station to the relay station 2 by using Frame-3 is relayed in order. Moreover, similarly to the third embodiment, this embodiment can be applied to the case where a synchronizing signal and a common control signal to be transmitted from the relay station 2 to the mobile station are not transmitted every frame.

### Seventh Embodiment

### Plurality of Relay Stations

When a plurality of relay stations is provided under a base station, a different frame construction every relay station may cause a situation where a certain relay station performs transmission by using AZ of DL and another adjacent relay station performs reception by using RZ. However, in this case, because electric waves of the relay station that performs transmission interfere in operations of the relay station that performs reception, there is a possibility that the relay station that performs reception cannot normally perform the reception. Similarly, when a certain relay station performs transmission by using RZ in UL and another adjacent relay station performs reception by using AZ, a signal of the relay station that performs transmission by using RZ is jammed by the relay station that must perform reception.

Because of this, all the relay stations (alternatively, all the relay stations provided under all the base stations) under the base station may employ a common frame construction without employing different frame constructions. By doing so, overhead caused by a common control signal designating a frame construction can be reduced, and further an interference problem caused by different RZ and AZ of each the relay station can be solved.

### System Configuration

Processing procedures (FIGS. 3, 4, and the like), concrete titles (FIG. 2 and the like), and information (FIG. 5 and the like) including various types of data and parameters, which are described in the document and the drawings, can be arbitrarily changed except that they are specially mentioned.

Moreover, each component of the base station 100, the relay station 200, and the mobile station 300 illustrated in FIG. 2 is a functional concept. Therefore, these components are not necessarily constituted physically as illustrated in the drawings. In other words, the specific configuration is not limited to the illustrated configuration. Therefore, the specific configuration can dispersed or integrated functionally or physically in an optional unit in accordance with various types of loads or operating conditions. Furthermore, all or a part of each process function performed by the base station 100, the relay station 200, and the mobile station 300 can be realized by CPU (central processing unit) and a program that is analyzed and executed by the CPU or can be realized by a hardware by wired logic.

In addition, a using method and a setting method of a radio frame explained in the embodiments can be realized by executing a program prepared beforehand with a computer. The program can be distributed via a network such as Internet. Moreover, the program can be recorded in a recording medium, which can be read by the computer, such as a hard disk, a flexible disk (FD), a CD-ROM, an MO, or a DVD and can be executed by being read from the recording medium by the computer.

## Claims

1. A radio relay system for performing data transmission between a base station (100) and a mobile station (300) by using a relaying process performed by a relay station (200), the radio relay system comprising
a control unit (130) for changing lengths of time zones (RZ, AZ) in radio frames according to a predetermined pattern of the radio frames, wherein the radio frames include
a first time zone (b) in which data transmission is allowed from the base station to the relay station and
a second time zone (c) in which data transmission is allowed from the relay station to the plurality of mobile stations including the mobile station,
wherein the first time zone (b) of a first radio frame (Frame-1) is longer than the first time zone (b) of a second radio frame (Frame-2), and
the second time zone (c) of the first radio frame (Frame-1) is shorter than the second time zone (c) of the second radio frame (Frame-2).

2. The radio relay system according to claim 1, wherein
the radio frames further include
a third time zone (d) in which data transmission is allowed from the plurality of mobile stations including the mobile station to the relay station and
a fourth time zone (e) in which data transmission is allowed from the relay station to the base station,
the third time zone (d) of the first radio frame (Frame-1) is longer than the third time zone (d) of the second radio frame (Frame-2), and
the fourth time zone (e) of the first radio frame (Frame-1) is shorter than the fourth time zone (e) of the second radio frame (Frame-2).

3. The radio relay system according to claim 1 or 2, wherein one or both of the first time zone (b) of the second radio frame (Frame-2) and the second time zone (c) of the first radio frame (Frame-1) are not provided.

4. The radio relay system according to any of the preceding claims,
wherein the first radio frame (Frame-1) and the second radio frame (Frame-2) are alternately repeated.

5. The radio relay system according to any of the preceding claims, wherein a synchronizing signal and a common control signal are transmitted from the relay station to the mobile station by using the second radio frame (Frame-2).

6. The radio relay system according to any of the preceding claims,
wherein the predetermined pattern of radio frames is notified from the base station to the relay station by sending a plurality of configuration information from the base station to the relay station; and
wherein the control unit (130) is further configured to change the lengths of the time zones by repeatedly applying the plurality of configuration information in order.

7. The radio relay system according to claim 6, wherein the plurality of configuration information is uniquely led from a frame number.

8. A radio relay method for performing data transmission between a base station (100) and a mobile station (300) by using a relaying process performed by a relay station (200), the radio relay method comprising
changing lengths of time zones (RZ, AZ) in radio frames according to a predetermined pattern of the radio frames, wherein the radio frames include
a first time zone (b) in which data transmission is allowed from the base station to the relay station and
a second time zone (c) in which data transmission is allowed from the relay station to the plurality of mobile stations including the mobile station,
wherein the first time zone (b) of a first radio frame (Frame-1) is longer than the first time zone (b) of a second radio frame (Frame-2), and
the second time zone (c) of the first radio frame (Frame-1) is shorter than the second time zone (c) of the second radio frame (Frame-2).

## Patentansprüche

1. Richtfunksystem zum Durchführen von Datenübertragung zwischen einer Basisstation (100) und einer Mobilstation (300) durch Verwenden eines Weiterschaltprozesses, der durch eine Zwischenstation (200) durchgeführt wird, wobei das Richtfunksystem umfasst:
eine Steuereinheit (130) zum Ändern von Längen von Zeitzonen (RZ, AZ) in Funkrahmen gemäß einem vorbestimmten Muster der Funkrahmen, wobei die Funkrahmen umfasst:
eine erste Zeitzone (b), in welcher Datenübertragung von der Basisstation an die Zwischenstation zugelassen ist, und
eine zweite Zeitzone (c), in welcher Datenübertragung von der Zwischenstation an die Mehrzahl von Mobilstationen, einschließlich der Mobilstation, zugelassen ist,
wobei die erste Zeitzone (b) eines ersten Funkrahmens (Frame-1) länger als die erste Zeitzone (b) eines zweiten Funkrahmens (Frame-2) ist, und
die zweite Zeitzone (c) des ersten Funkrahmens (Frame-1) kürzer als die zweite Zeitzone (c) des zweiten Funkrahmens (Frame-2) ist.

2. Richtfunksystem nach Anspruch 1, wobei die Funkrahmen ferner umfassen:
eine dritte Zeitzone (d), in welcher Datenübertragung von der Mehrzahl von Mobilstationen, einschließlich der Mobilstation, an die Zwischenstation zugelassen ist, und
eine vierte Zeitzone (e), in welcher Datenübertragung von der Zwischenstation an die Basisstation zugelassen ist,
wobei die dritte Zeitzone (d) des ersten Funkrahmens (Frame-1) länger als die dritte Zeitzone (d) des zweiten Funkrahmens (Frame-2) ist, und
die vierte Zeitzone (e) des ersten Funkrahmens (Frame-1) kürzer als die vierte Zeitzone (e) des zweiten Funkrahmens (Frame-2) ist.

3. Richtfunksystem nach Anspruch 1 oder 2, wobei eine oder beide der ersten Zeitzone (b) des zweiten Funkrahmens (Frame-2) und der zweiten Zeitzone (c) des ersten Funkrahmens (Frame-1) nicht zur Verfügung stehen.

4. Richtfunksystem nach einem der vorhergehenden Ansprüche,
wobei der erste Funkrahmen (Frame-1) und der zweite Funkrahmen (Frame-2) alternativ wiederholt werden.

5. Richtfunksystem nach einem der vorhergehenden Ansprüche, wobei ein Synchronisierungssignal und ein gemeinsames Steuersignal durch Verwenden des zweiten Funkrahmens (Frame-2) von der Zwischenstation an die Mobilstation gesendet werden.

6. Richtfunksystem nach einem der vorhergehenden Ansprüche,
wobei das vorbestimmte Muster von Funkrahmen von der Basisstation der Zwischenstation durch Senden einer Mehrzahl von Konfigurationsinformationen von der Basisstation an die Zwischenstation mitgeteilt wird; und
wobei die Steuereinheit (130) ferner so konfiguriert ist, dass sie die Längen der Zeitzonen durch wiederholtes Anwenden der Mehrzahl von Konfigurationsinformationen in Folge wiederholt.

7. Richtfunksystem nach Anspruch 6, wobei die Mehrzahl von Konfigurationsinformationen aus einer Rahmennummer eindeutig abgeleitet ist.

8. Richtfunkverfahren zum Durchführen von Datenübertragung zwischen einer Basisstation (100) und einer Mobilstation (300) durch Verwenden eines Weiterschaltprozesses, der durch eine Zwischenstation (200) durchgeführt wird, wobei das Richtfunkverfahren umfasst:
Ändern von Längen von Zeitzonen (RZ, AZ) in Funkrahmen gemäß einem vorbestimmten Muster der Funkrahmen, wobei die Funkrahmen umfassen:
eine erste Zeitzone (b), in welcher Datenübertragung von der Basisstation an die Zwischenstation zugelassen ist, und
eine zweite Zeitzone (c), in welcher Datenübertragung von der Zwischenstation an die Mehrzahl von Mobilstationen, einschließlich der Mobilstation, zugelassen ist,
wobei die erste Zeitzone (b) eines ersten Funkrahmens (Frame-1) länger als die erste Zeitzone (b) eines zweiten Funkrahmens (Frame-2) ist, und
die zweite Zeitzone (c) des ersten Funkrahmens (Frame-1) kürzer als die zweite Zeitzone (c) des zweiten Funkrahmens (Frame-2) ist.

## Revendications

1. Système de relais radio pour effectuer une transmission de données entre une station de base (100) et une station mobile (300) en utilisant un processus de relayage effectué par une station relais (200), le système de relais radio comportant :
une unité de contrôle (130) pour changer les longueurs des zones de temps (RZ, AZ) dans les trames radio conformément à un motif prédéterminé des trames radio, dans laquelle les trames radio comprennent
une première zone de temps (b) dans laquelle une transmission de données est autorisée de la station de base à la station relais et
une seconde zone de temps (c) dans laquelle une transmission de données est autorisée de la station relais à la pluralité de stations mobiles comprenant la station mobile,
où la première zone de temps (b) d'une première trame radio (Frame-1) est plus longue que la première zone de temps (b) d'une seconde trame radio (Frame-2), et
la seconde zone de temps (c) de la première trame radio (Frame-1) est plus courte que la seconde zone de temps (c) de la seconde trame radio (Frame-2).

2. Système de relais radio selon la revendication 1, dans lequel
les trames radio comprennent en outre
une troisième zone de temps (d) dans laquelle une transmission de données est autorisée de la pluralité de stations mobiles comprenant la station mobile à la station relais et
une quatrième zone de temps (e) dans laquelle une transmission de données est autorisée de la station relais à la station de base,
la troisième zone de temps (d) de la première trame radio (Frame-1) est plus longue que la troisième zone de temps (d) de la seconde trame radio (Frame-2), et
la quatrième zone de temps (e) de la première trame radio (Frame-1) est plus courte que la quatrième zone de temps (e) de la seconde trame radio (Frame-2).

3. Système de relais radio selon la revendication 1 ou 2, dans lequel une ou les deux de la première zone de temps (b) de la seconde trame radio (Frame-2) et de la seconde zone de temps (c) de la première trame radio (Frame-1) ne sont pas délivrées.

4. Système de relais radio selon l'une quelconque des revendications précédentes,
dans lequel la première trame radio (Frame-1) et la seconde trame radio (Frame-2) sont alternativement répétées.

5. Système de relais radio selon l'une quelconque des revendications précédentes, dans lequel un signal de synchronisation et un signal de contrôle commun sont transmis de la station relais à la station mobile en utilisant la seconde trame radio (Frame-2).

6. Système de relais radio selon l'une quelconque des revendications précédentes,
dans lequel le motif prédéterminé des trames radio est notifié de la station de base à la station relais en envoyant une pluralité d'informations de configuration de la station de base à la station relais ; et
dans laquelle l'unité de contrôle (130) est un outre configurée pour changer les longueurs des zones de temps en appliquant de façon répétée la pluralité d'informations de configuration dans l'ordre.

7. Système de relais radio selon la revendication 6, dans lequel la pluralité d'informations de configuration est uniquement acheminée à partir d'un numéro de trame.

8. Procédé de relais radio pour effectuer une transmission de données entre une station de base (100) et une station mobile (300) en utilisant un processus de relayage effectué par une station relais (200), le procédé de relais radio comportant
le changement des longueurs de zone de temps (RZ, AZ) dans les trames radio conformément à un motif prédéterminé des trames radio, où les trames radio comprennent
une première zone de temps (b) dans laquelle une transmission de données est autorisée de la station de base à la station relais et
une seconde zone de temps (c) dans laquelle une transmission de données est autorisée de la station relais à la pluralité de stations mobiles comprenant la station mobile,
dans laquelle la première zone de temps (b) d'une première trame radio (Frame-1) est plus longue que la première zone de temps (b) d'une seconde trame radio (Frame-2), et
la seconde zone de temps (c) de la première trame radio (Frame-1) est plus courte que la seconde zone de temps (c) de la seconde trame radio (Frame-2).
